**Europäisches Patentamt**

**European Patent Office**

**Office européen des brevets**

(19)

(11) Veröffentlichungsnummer: **0 148 261
B1**

(12) ## EUROPÄISCHE PATENTSCHRIFT

(45) Veröffentlichungstag der Patentschrift:
**13.05.87**

(51) Int. Cl.⁴: **B 01 D 53/34**

(21) Anmeldenummer: **84902784.2**

(22) Anmeldetag: **11.07.84**

(86) Internationale Anmeldenummer:
**PCT/DE 84/00142**

(87) Internationale Veröffentlichungsnummer:
**WO 85/00300 (31.01.85** Gazette 85/3)

(54) **VERFAHREN ZUR VERRINGERUNG VON NO x? -GEHALTEN IN ABGASEN.**

(30) Priorität: **12.07.83 DE 3325041
17.02.84 DE 3405650**

(43) Veröffentlichungstag der Anmeldung:
**17.07.85 Patentblatt 85/29**

(45) Bekanntmachung des Hinweises auf die Patenterteilung:
**13.05.87 Patentblatt 87/20**

(84) Benannte Vertragsstaaten:
**AT BE CH DE FR GB LI LU NL SE**

(56) Entgegenhaltungen:
**EP - A - 0 059 248
FR - A - 2 285 171
FR - A - 2 325 420
GB - A - 883 945
US - A - 3 887 683
US - A - 4 160 805**

(73) Patentinhaber: **Uhde GmbH, Friedrich-Uhde-Strasse 15,
D-4600 Dortmund 1 (DE)**

(72) Erfinder: **WOLSTEIN, Friedrich, Goethestrasse 66,
D-4300 Essen (DE)**

(74) Vertreter: **Patentanwälte Meinke und Dabringhaus
Dipl.-Ing. J. Meinke Dipl.-Ing. W. Dabringhaus,
Westenhellweg 67, D-4600 Dortmund 1 (DE)**

## Beschreibung

Die Erfindung richtet sich auf ein Verfahren zur Verringerung von $NO_x$-Gehalten in Abgasen aus mittels fossiler Brennstoffe betriebenen Kraftwerken mit einer katalytischen Reduktion der $NO_x$-Gase unter Einsatz von Kohlenwasserstoffen bei einer Temperatur gleich oder kleiner als 180°C sowie unter Einsatz eines waschbaren Katalysators.

Aus der FR-A-2 325 420 ist ein Verfahren bekannt, das zur Verringerung von $NO_x$-Gehalten in Abgasen aus mittels fossiler Brennstoffe betriebenen Kraftwerken geeignet ist, mit einer katalytischen Reduktion der $NO_x$-Gase unter Einsatz eines Katalysators, wobei die Reduktion unter Einsatz von Ammin bei einer Temperatur kleiner als 180°C erfolgen kann. Dabei wird ein Reduktionsadditiv über eine besondere Sprühanlage vor dem Katalysator in den Gasstrom eingesprüht. Die FR-A-2 285 171 zeigt ein ähnliches Verfahren, allerdings bei viel höheren Temperaturen.

Aus der DE-A-31 07 117 (& EP-A-59248) ist ein oben angegebenes Verfahren für Salpetersäureanlagen bekannt, bei dem die Verringerung der $NO_x$-Gehalte in den Abgasen zweistufig erfolgt, wobei dort in der ersten Stufe durch z.B. Natronlauge ein Teil des $NO_x$-Gases herausgelöst und anschliessend in einer zweiten Stufe der verbleibende Rest katalytisch unter Zugabe vom Ammoniak zu Stickstoff reduziert wird. Der eingesetzte Katalysator ist alkalibeständig und mit Wasser waschbar.

Durch den Einsatz von Ammoniak besteht eine wenigstens theoretische Gefahr einer Ammonnitratbildung und damit eine Verpuffungsgefahr.

Aufgabe der Erfindung ist die Schaffung eines Verfahrens zur Verringerung von $NO_x$-Gehalten in Abgasen, mit dem unter Beibehaltung der Vorteile des bekannten Verfahrens gemäss DE-A-31 07 117 diese Gefahr vermieden wird und das sich zum Einsatz einer grossen Bandbreite von Abgasen eignet, d.h. das insbesondere nicht auf Salpetersäureanlagen beschränkt ist.

Bei einem Verfahren der eingangs bezeichneten Art wird diese Aufgabe gemäss der Erfindung dadurch gelöst, dass zur Reduktion die ungesättigten Kohlenwasserstoffe, die im Abgasstrom bereits enthalten sind, ohne Zufuhr weiterer Kohlenwasserstoffe eingesetzt werden.

Überraschend hat sich gezeigt, dass mit dieser Verfahrensweise eine ganz erhebliche Abnahme des $NO_x$-Gehaltes erreichbar ist, ohne dass es zusätzlichen Hinzufügens anderer Mittel in den Abgasstrom bedarf. Damit werden die Betriebskosten vermindert und das Verfahren optimiert.

In einem Kurzzeitversuch wurde in einem Abgas mit etwa 600 ppm $NO_x$ der $NO_x$-Gehalt unter Zugabe von Ammoniak auf Werte unter 30 ppm vermindert. Die Temperatur der Abgase war 120 bis 130°C.

Gemäss dem erfindungsgemässen Verfahren (ohne Zugabe von Ammoniak) wurde unter den gleichen Bedingungen der $NO_x$-Gehalt auf unter 20 ppm vermindert.

Gleichzeitig wird der Gehalt an Kohlenwasserstoffen in den Abgasen vermindert. Auch kann mit der erfindungsgemässen Verfahrenweise erreicht werden, dass sich z.B. Ammonsulfate bzw. Bisulfate erst gar nicht bilden.

Besonders zweckmässig hat es sich erwiesen, wenn im Abgas Kohlenwasserstoffe mit Zwei- oder Dreifachbindungen und/oder Gemische von Kohlenwasserstoffen mit Zwei- oder Dreifachbindungen vorhanden sind.

Um eine gute Prozessführung zu erreichen, sieht die Erfindung auch vor, dass der Abgasstrom zur katalytischen Reduktion durch ein Katalysatorgranulat und/oder zwischen Katalysatorplatten hindurchgeführt wird. Die letzte Massnahme macht es möglich, sehr hohe Abgasströme durchzusetzen und erfindungsgemäss zu behandeln, wodurch sie sich insbesondere zum Einsatz bei Abgasen von Kraftwerken oder ähnlichen Anlagen eignet.

Nach der Erfindung kann auch vorgesehen sein, dass das Abgas anschliessend einer $SO_2$-Verminderungsanlage zugeführt wird.

*Beispiele*

1) Abgas Kohlekraftwerk
Temperatur 130°C
Katalysator kco —— 1934 k/d (aktivierter Edelmetallkatalysator auf Aluminium-Siliciumbasis)
Raumgeschwindigkeit: 20000 VVh
$NO_x$-Gehalt vor katalytischer Reaktion 650 ppm
$NO_x$-Gehalt nach katalytischer Reaktion über 20 ppm
Kohlenwasserstoffe: Ethylen, Propylen

2) Abgas Kohlekraftwerk
Temperatur 130°C
Katalysator kco —— 1934 k/m
Raumgeschwindigkeit: 20000 VVh
$NO_x$-Gehalt vor katalytischer Reaktion ca. 720 ppm
$NO_x$-Gehalt nach katalytischer Reaktion ca. 40 ppm
Kohlenwasserstoffe: Ethylen, Propylen

3) Abgas Salpetersäureanlage
Temperatur 170°C
Katalysator kco —— 1934 k/m
Raumgeschwindigkeit: 25000 VVh
$NO_x$-Gehalt vor katalytischer Reaktion 800 ppm
$NO_x$-Gehalt nach katalytischer Reaktion 50 ppm
Kohlenwasserstoffe: Propylen

## Patentansprüche

1. Verfahren zur Verringerung von $NO_x$-Gehalten in Abgasen aus mittels fossiler Brennstoffe betriebenen Kraftwerken mit einer katalytischen Reduktion der $NO_x$-Gase unter Einsatz von Kohlenwasserstoffen bei einer Temperatur gleich oder kleiner als 180°C sowie unter Einsatz eines waschbaren Katalysators, dadurch gekennzeichnet, dass zur Reduktion die ungesättigten Kohlenwasserstoffe, die im Abgasstrom bereits enthalten sind, ohne Zufuhr weiterer Kohlenwasserstoffe eingesetzt werden.

2. Verfahren nach Anspruch 1, dadurch gekennzeichnet, dass ein Abgas mit Kohlenwasserstoffen mit Zwei- oder Dreifachbindungen eingesetzt wird.

3. Verfahren nach Anspruch 1 oder 2, dadurch gekennzeichnet, dass ein Abgas mit einem Gemisch von Kohlenwasserstoffen mit Zwei- oder Dreifachbindungen eingesetzt wird.

4. Verfahren nach einem der vorangehenden Ansprüche, dadurch gekennzeichnet, dass der Abgasstrom zur katalytischen Reduktion durch ein Bett mit Katalysatorgranulat geführt wird.

5. Verfahren nach einem der vorangehenden Ansprüche, dadurch gekennzeichnet, dass der Abgasstrom zwischen Katalysatorplatten hindurchgeführt wird.

6. Verfahren nach einem der vorangehenden Ansprüche, dadurch gekennzeichnet, dass das Abgas anschliessend einer Anlage zur SO$_2$-Verminderung zugeführt wird.

## Claims

1. A method of reducing NO$_x$ contents in waste gases from power stations operated with fossil fuels, with catalytic reduction of the NO$_x$ gases using hydrocarbons at a temperature of equal to or lower than 180°C and using a washable catalyst characterised in that for the reduction operation the unsaturated hydrocarbons which are already contained in the waste gas flow are used without the addition of further hydrocarbons.

2. A method according to claim 1 characterised by using a waste gas with hydrocarbons with double or triple bonds.

3. A method according to claim 1 or claim 2 characterised by using a waste gas with a mixture of hydrocarbons with double or triple bonds.

4. A method according to one of the preceding claims characterised in that the waste gas flow is passed for the catalytic reduction step through a bed with catalyst granular material.

5. A method according to one of the preceding claims characterised in that the waste gas flow is passed between catalyst plates.

6. A method according to one of the preceding claims characterised in that the waste gas is then passed to an installation for reducing the SO$_2$ content.

## Revendications

1. Procédé pour abaisser des teneurs en NO$_x$ dans des gaz d'échappement provenant de centrales électriques fonctionnant au moyen de combustibles fossiles, avec réduction catalytique des gaz de NO$_x$ en utilisant des hydrocarbures à une température égale ou inférieure à 180°C, ainsi qu'en utilisant un catalyseur lavable, caractérisé par le fait que, en vue de la réduction, les hydrocarbures non saturés déjà renfermés par le flux des gaz d'échappement sont utilisés sans adjonction d'autres hydrocarbures.

2. Procédé selon la revendication 1, caractérisé par le fait qu'on utilise des gaz d'échappement renfermant des hydrocarbures à combinaisons doubles ou triples.

3. Procédé selon la revendication 1 ou 2, caractérisé par le fait qu'on utilise des gaz d'échappement renfermant des mélanges d'hydrocarbures à combinaisons doubles ou triples.

4. Procédé selon l'une quelconque des revendications précédentes, caractérisé par le fait que, en vue de la réduction catalytique, le flux des gaz d'échappement est dirigé à travers un lit de catalyseur granulaire.

5. Procédé selon l'une quelconque des revendications précédentes, caractérisé par le fait que le flux des gaz d'échappement est dirigé entre des plaques de catalyse.

6. Procédé selon l'une quelconque des revendications précédentes, caractérisé par le fait que les gaz d'échappement sont consécutivement dirigés vers une installation diminuant le SO$_2$.